# EUROPEAN PATENT SPECIFICATION

(11) **EP 2 804 234 B1**
(45) Date of publication and mention of the grant of the patent: **15.08.2018**
(21) Application number: 14156355.1
(22) Date of filing: 24.02.2014
(51) Int. Cl.: H01M 2/02, H01M 2/32, H01M 2/34, H01M 10/052

(54) **Rechargeable battery with insulation member having two insulation portions**
Wiederaufladbare Batterie mit Isolationselement mit zwei Isolierungsteilen
Batterie rechargeable avec élément d'isolation comportant deux parties d'isolation

(30) Priority: 15.05.2013 US 201361823639 P; 14.02.2014 US 201414180821
(43) Date of publication of application: 19.11.2014
(73) Proprietor: Samsung SDI Co., Ltd., Yongin-si, Gyeonggi-do 449-577 (KR)
(72) Inventor: Kim, Sung-Kab, 449-577 Yongin-si, Gyeonggi-do (KR); Kim, Yong-Sam, 449-577 Yongin-si, Gyeonggi-do (KR); Park, Se-Jong, 449-577 Yongin-si, Gyeonggi-do (KR); Kim, Sung-Hoon, 449-577 Yongin-si, Gyeonggi-do (KR); Jang, Myung-Jae, 449-577 Yongin-si, Gyeonggi-do (KR)
(74) Representative: Gulde & Partner

(56) References cited:
- EP-A1- 2 290 732
- EP-A1- 2 528 131
- KR-A- 20120 132 353
- US-A1- 2010 310 912
- US-A1- 2012 164 501

## Description

### BACKGROUND

### 1. Field

The invention is directed to a rechargeable battery, and more particularly, to a rechargeable battery with a case having an opening, an electrode assembly arranged in the case, the electrode assembly comprising a first electrode, a second electrode and a separator between the first and the second electrodes, a cap plate coupled to the case and closing the opening, and an insulation member arranged between the electrode assembly and the case, wherein the electrode assembly comprises a first electrode non-coated part, a second electrode non-coated part, a first surface, a second surface positioned at the opposite side of the electrode assembly, a third surface and a fourth surface, the third surface and the fourth surface connecting the first surface to the second surface, the first to fourth surfaces being formed between the first and second electrode non-coated parts and the third surface facing the cap plate.

### 2. Description of the Related Art

Rechargeable batteries are batteries that are rechargeable and dischargeable, unlike primary batteries that cannot be rechargeable. Low-capacity rechargeable batteries are used for small portable electronic devices such as mobile phones, laptop computers and camcorders, and large-capacity chargeable batteries are widely used as power supplies for driving motors for hybrid cars or the like. Rechargeable batteries are disclosed in US 2010/0310912 A1, EP 2 290 732 A1, KR 2012 0132353 A, US 2012/164501 A1 and EP 2 528 131 A1.

Recently, high-output rechargeable batteries using a non-aqueous electrolyte with high energy density have been developed. The high-output rechargeable batteries are configured of large-capacity battery modules in which a plurality of rechargeable batteries are connected to each other in series so as to be used for driving motors for devices requiring large power, for example, electric cars, or the like.

The case of the rechargeable battery may be manufactured in a cylindrical shape or a squared shape. As a material of the case of the rechargeable battery, aluminum having excellent formability and electrical conductivity may be used.

However, in the case of the case of the rechargeable battery made of the aluminum material, when an external force is applied to case, the case is modified, such that a current collector, the electrode assembly, or the like installed in the case and the case are electrically connected to each other, thereby causing a short circuit in the case.

Therefore, a film which is made of a synthetic resin is installed between the case of the rechargeable battery and the electrode assembly to prevent the short circuit from being generated due to the deformation of the case.

However, the film made of the synthetic resin may be molten by the electrolyte present in the inner portion of the case.

In addition, the film made of the synthetic resin may be deformed by heat generated when the cap plate is adhered to the case, such that an insulation performance may be degraded.

### SUMMARY

The present invention has been made to solve the above problems and to provide a rechargeable battery including an insulation member capable of preventing a short circuit in the rechargeable battery, securing an insulation property in a case. Therefore, the object of the invention is to provide a rechargeable battery that can easily be produced and that can safely be operated.

The object is achieved for the rechargeable battery mentioned in the beginning in that the insulation member comprises a first insulation portion and a second insulation portion that projects from the first insulation portion and that is in contact with the third surface, wherein an edge of the first insulation portion and the second insulation portion both abut the same plane. In particular, a side facing away from the electrode assembly of the second insulation portion abuts the plane. The plane extends perpendicular to the side of the first insulation portion from which the second insulation portion protrudes. The parts of the first and the second insulation portions that abut the plane form a stop for the cap plate, on which the cap plate is positioned during affixing it to the case.

This simple solution provides that the insulation member is more stable than known insulation members and that the insulation member not only covers one side, but two sides of the electrode assembly, wherein the second insulation portion covers the third surface and protects it from the connecting process with which the cap plate is affixed to the case.

The solutions according to the invention can be combined as desired and further improved by the further following embodiments that are advantageous on their own, on each case.

The second insulation portion may at least sectionwise be formed complementary to the third surface. A second insulation portion formed according to the invention covers the third surface of the electrode assembly more complete than an insulation portion that is formed differently. Furthermore, by forming the second insulation portion and the third surface at least sectionwise complementary to each other, space needed to accommodate the second insulation portion is minimized, improving energy density of the rechargeable battery. For instance, the third surface is formed such that it is at least sectionwise encompassed by the second insulation portion.

In particular the first insulation portion may be formed as an insulation plate that is rigid and therefore does not deform under its own weight, thereby improving insulation between the electrode assembly and the case during assembly and operation of the rechargeable battery. The second insulation portion may be rigid, too. As the second insulation portion protrudes from the first insulation portion, the second insulation portion can be designated as an insulation protrusion. Even if the case is deformed, the plate-shaped first insulation portion and the rigid second insulation portion provide better insulation properties than the known insulation films.

In order to form the second insulation portion and the third surface at least sectionwise complementary to each other, the third surface may be curved and may comprise a first radius of curvature. The second insulation portion may comprise a curved surface that faces the electrode assembly and is preferably in contact with the third surface of the electrode assembly, the curved surface of the second insulation portion comprising a second radius of curvature, wherein the radii of curvature correspond to each other. Forming the second insulation portion with the curved surface that faces the electrode assembly not only provides for the complementary shape, but furthermore improves mechanical stability of the second insulation portion, in particular if the second insulation portion is arch-shaped.

In order to fix the relative position of the insulation member with respect to the electrode assembly, the electrode assembly and the second insulation portion may be interconnected by a force fit.

A clear width of the second insulation portion is preferably formed for at least sectionwise accommodating the third surface. The clear width may extend between the first insulation portion and a free end of the second insulation portion, which protrudes from the first insulation portion. The clear width may be smaller than a width of the electrode assembly, thereby providing for the force fit, in case the third surface is at least sectionwise arranged in the clear width.
The third surface is preferably curved and comprises a first radius of curvature, and the second insulation portion comprises a curved surface that is in contact with the third surface of the electrode assembly, the curved surface of the second insulation portion comprising a second radius of curvature, wherein the second radius of curvature is smaller than the first radius of curvature. Curved surfaces reduce a risk of damaging the electrode assembly when combining it with the insulation member. Moreover, the chosen difference between the radii provides an easy way of establishing the force fit, as it is sufficient to simply place at least a section of the third surface of the electrode assembly into the clear width formed by the curved surface of the second insulation portion.

The second insulation portion may project from a side of the first insulation portion that faces the electrode assembly, thereby avoiding increasing a height of the space in the case necessary for the insulation portion.

The second insulation portion is preferably arranged at a distance from at least an edge and for instance from all edges of the first insulation portion in order to facilitate an easy installation of the insulation member. Hence, the second insulation portion preferably not extends beyond at least one or any edge of the first insulation portion parallel to the first insulation portion.

The edge of the first insulation portion and the second insulation portion both abut the same plane. In particular, a side facing away from the electrode assembly of the second insulation portion abuts the plane. The plane extends perpendicular to the side of the first insulation portion from which the second insulation portion protrudes. The parts of the first and the second insulation portions that abut the plane thereby form a stop for the cap plate, on which the cap plate may be positioned during affixing it to the case.

According to another advantageous embodiment, the insulation member may comprise a third insulation portion parallel and at a distance to the first insulation portion, wherein the second insulation portion spans a gap between the first and the third insulation portions. The second insulation portion may interconnect the first and the third insulation portions such that the third insulation portion can be elastically moved or swiveled away from or towards the first insulation portion in order to widen a gap between the first and the third insulation portion during the insertion of the electrode assembly into the insulation member, which facilitates the combination of the electrode assembly and the insulation member. The third insulation portion may be plate-shaped and rigid. Thus, the third insulation portion may be designated as a second insulation plate. While being arranged between the first and the third insulation portions, the electrode assembly is insulated at two opposite sides, namely the first and the second surfaces of the electrode assembly. The third insulation portion may be based on the free end of the second insulation portion of the previous embodiments, thereby avoiding that the free end collides with other elements of the rechargeable battery during its assembly.

The insulation member preferably comprises the second and a fourth insulation portion projecting from the same side of the first insulation portion. The fourth insulation portion may be designated as a second insulation protrusion, as it protrudes from the first insulation portion like the second insulation portion. The second and the fourth insulation portions may both be arranged at the same side of the electrode assembly, improving the connection between in the insulation member and the electrode assembly and the coverage of the third side.

Additionally or alternatively the second and a fourth insulation portions may be arranged at opposite sides of the electrode assembly. In particular, the electrode assembly may be held between the second and the fourth insulation portions.

The insulation member may at least sectionwise cover two or three sides of the electrode assembly. Furthermore, on one side and e.g. the third side, the second and the fourth insulation portion and on the opposite, i.e. the fourth side of the electrode assembly, only another second or another fourth insulation portion may be present. The insulation member may comprise the first, the second and the third, the first, the second and the fourth or the first, the second, the third and the fourth insulation portions.

The third insulation portion may extend from the second insulation portion towards the fourth insulation portion or vice versa, thereby forming a tube like enclosure, e.g. an envelope or a pocket for the electrode assembly.

The third insulation portion preferably ends at a distance to the fourth insulation portion such that a free end of the third insulation portion can be elastically moved or swiveled in order to widen a gap between the first and the third insulation portion during the insertion of the electrode assembly into the insulation member, which facilitates the combination of the electrode assembly and the insulation member.

The second insulation portion may be in extensive contact with the electrode assembly. By this, the insulation of the electrode assembly from the case is improved and the space required for the electrode assembly and the insulation member is minimized.

The invention is described hereinafter in greater detail and in an exemplary manner using advantageous embodiments and with reference to the drawings. The described embodiments are only possible configurations in which, however, the individual features as described above can be provided independently of one another or can be omitted in the drawings.

### BRIEF DESCRIPTION OF THE DRAWINGS

FIG. 1 is a perspective view showing a rechargeable battery according to a first embodiment of the present invention.
FIG. 2 is a cross-sectional view taken along line II-II in FIG. 1.
FIG. 3 is a perspective view of an insulation member of a rechargeable battery according to the first embodiment of the present invention.
FIG. 4 is a side view of an insulation member in a state in which it is coupled to an electrode assembly of FIG. 3.
FIG. 5 is a perspective view of an insulation member according to a modification example of the first embodiment of the present invention.
FIG. 6 is a perspective view of an insulation member of a rechargeable battery according to a second embodiment of the present invention.
FIG. 7 is a side view of an insulation member in a state in which is coupled to an electrode assembly of FIG. 6.
FIG. 8 is a perspective view of an insulation member of a rechargeable battery according to a third embodiment of the present invention.
FIG. 9 is a side view of an insulation member in a state in which is coupled to an electrode assembly of FIG. 8.

### DETAILED DESCRIPTION

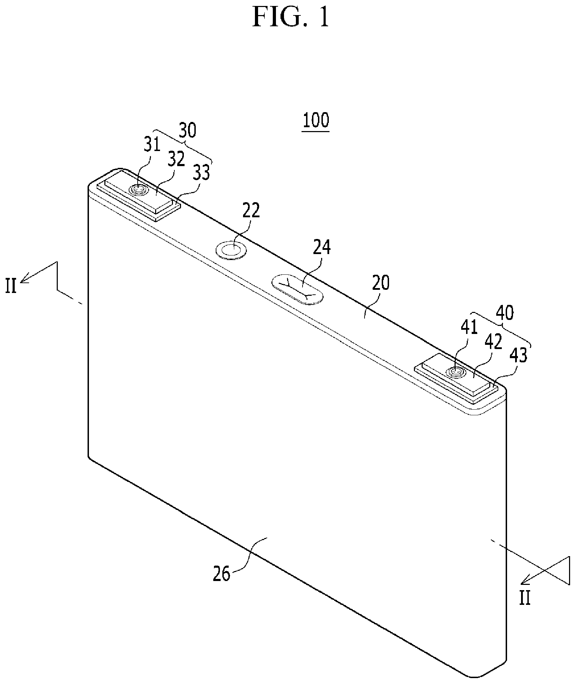

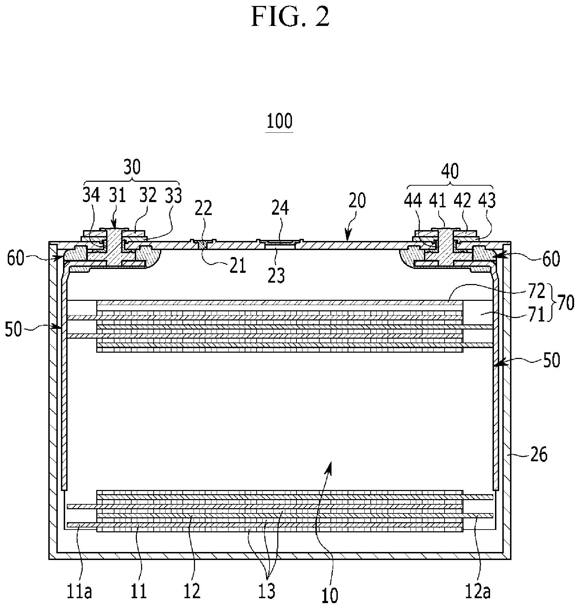

FIG. 1 is a perspective view showing a rechargeable battery according to a first embodiment of the present invention and FIG. 2 is a cross-sectional view taken along line II-II in FIG. 1.

Describing with reference to FIGS. 1 and 2, a rechargeable battery 100 according to the first embodiment of the present invention includes an electrode assembly 10, a case 26 in which the electrode assembly 10 is embedded, a first terminal part 30 and a second terminal part 40 electrically connected with the electrode assembly 10, a cap plate 20 coupled with an opening formed in the case 26, and a gasket 60 and an insulation member 70 installed in the case 26.

The rechargeable battery 100 according to the exemplary embodiment of the present invention is a lithium ion rechargeable battery. Herein, a square rechargeable battery will be described by way of example. However, the exemplary embodiment is not limited thereto and the exemplary embodiment of the present invention may be applied to a battery such as a lithium polymer battery, or the like.

In addition, a first electrode 11 may be a negative electrode and a second electrode 12 may be a positive electrode, and vice versa.

The electrode assembly 10 is wound with the first electrode 11, the second electrode 12, and a separator 13 together to form a jelly roll type.

The first electrode 11 and the second electrode 12 each include a current collector formed of a thin metal foil and an active material coated on a surface of the current collector.

In addition, the first electrode 11 and the second electrode 12 may be partitioned a coating part in which an active material is coated on the current collector and a first electrode non-coated part 11a and a second electrode non-coated part 12a in which the active material is not coated on the current collector.

The coating part forms a substantial portion of the first electrode 11 and the second electrode 12 and the first electrode non-coated part and the second non-coated part 11a and 12a are each disposed at both sides of the coating part in the jelly roll state.

However, the exemplary embodiment of the present invention is not limited thereto. The above-mentioned electrode assembly 10 may be formed in a stacked structure, having the separator 13 between the first electrode 11 and the second electrode 12 formed of a plurality of sheets.

The first electrode non-coated part 11a and the second electrode non-coated part 12a of the electrode assembly 10 are electrically connected to the first terminal part 30 and the second terminal part 40 via an electrode current collection member 50, respectively.

The case 26 is formed in an approximately rectangular parallelepiped shape and one surface thereof is provided with an opened opening. However, the exemplary embodiment of the present invention is not limited thereto and the case may be formed in various shapes, such as a cylindrical shape, a pouch shape, or the like.

The cap plate 20 is formed of a thin plate formed of the aluminum and is coupled with the opening of the case 26 to close the opening.

In addition, the cap plate 20 is provided with an electrolyte inlet 21 that injects the electrolyte into the sealed case 26, wherein the electrolyte inlet 21 is sealed by a sealing closure 22 after the electrolyte is injected.

Further, the cap plate 20 is provided with a vent hole 23 mounted with a vent plate 24 fractured when an internal pressure of the sealed case 26 is a set pressure or more.

The first and second terminal parts 30 and 40 includes first and second rivets 31 and 41, first and second terminal plates 32 and 42, first and second terminal insulators 33 and 43 installed between the first and second terminal plates 32 and 42 and the cap plate 20, and first and second terminal gaskets 34 and 44.

The second terminal gasket 44 may be made of a conductive material or an insulation material.

Here, when the second terminal gasket 44 according to an exemplary embodiment of the present invention is made of the conductive material, since the case 26 is electrically connected to the second electrode 12, the case 26 may be charged with a negative pole or a positive pole.

On the other hand, when the second terminal gasket 44 according to the exemplary embodiment of the present invention is made of the insulation material, the case 26 may be maintained in a state in which is electrically neutral without charging with the negative pole or the positive pole.

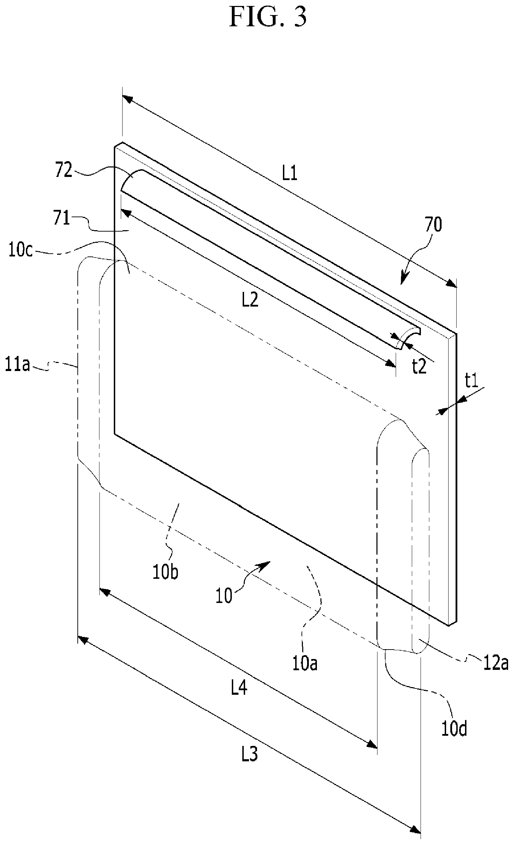

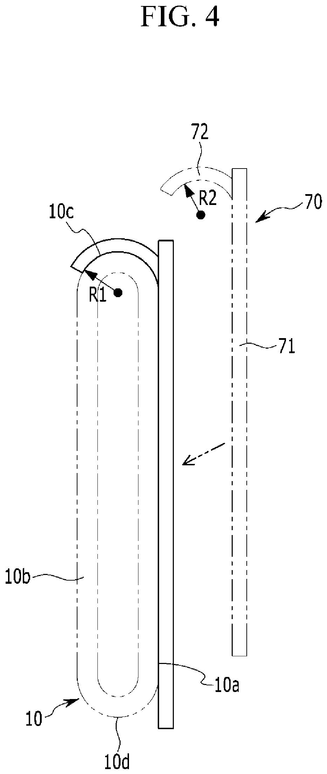

FIG. 3 is a perspective view of an insulation member of a rechargeable battery according to a first embodiment of the present invention and FIG. 4 is a side view of an insulation member in a state in which is coupled to an electrode assembly of FIG. 3.

Referring to FIGS. 3 and 4, the insulation member 70 of the rechargeable battery 100 according to an embodiment of the present invention may include a first insulation portion 71 and a second insulation portion 72.

The electrode assembly 10 according to the exemplary embodiment of the present invention is formed of a first surface 10a formed between a first electrode non-coated part 11a and a second electrode non-coated part 12a, a second surface 10b positioned at the opposite side of the first surface 10a and formed between the first electrode non-coated part 11a and the second electrode non-coated part 12a, and a third surface 10c and a fourth surface 10d connecting to each other in one end and the other end of the first surface 10a and the second surface 10b.

Here, the electrode assembly 10 according to the exemplary embodiment of the present invention may be installed in the case 26 so that the third surface 10c faces the cap plate 20.

In addition, the first insulation portion 71 according to the exemplary embodiment of the present invention has a thin plate shape and may be installed at one side of the electrode assembly 10.

More particularly, the first insulation portion 71 may be installed so as to be closely adhered to the first surface 10a of the electrode assembly 10.

Here, a first length L1 of the first insulation portion 71 may be the same as an entire length L3 of a first electrode non-coated part 11a of the electrode assembly 10.

Therefore, the first insulation portion 71 according to the exemplary embodiment of the present invention may prevent an inner side of the case 26 and the first surface 10a of the electrode assembly 10 and the first electrode non-coated part 11a and the second electrode non-coated part 12a from being physically or electrically contacted.

In addition, the second insulation portion 72 according to the exemplary embodiment of the present invention is extended from one end of the first insulation portion 71 may be installed on one surface of the electrode assembly 10 facing the cap plate 20.

More particularly, the second insulation portion 72 may be installed so as to be closely adhered to the third surface 10c of the electrode assembly 10.

Here, the cross section of the second insulation portion 72 may have a shape corresponding to, i.e. being formed complementary to, that of the third surface 10c of the electrode assembly 10.

For example, the shape of the cross section of the third surface 10c of the electrode assembly 10 may be an arch-shape having a first radius of curvature R1.

In addition, the shape of the cross section of the second insulation portion 72 may be the arch-shape corresponding to that of the third surface 10c, having a second radius of curvature R2.

However, the shape of the cross section of the second insulation portion 72 is not limited to the arch-shape and may be a shape corresponding to that of the cross section of the third surface 10c of the electrode assembly 10.

Here, the first radius of curvature R1 of the third surface 10c of the electrode assembly 10 may be larger than the second radius of curvature R2 of the second insulation portion 72.

Therefore, the second insulation portion 72 may be coupled to the third surface 10c in forcedly fitting scheme.

In addition, the second length L2 of the second insulation portion 72 may be the same as or longer than a length L4 of the first surface 10a of the electrode assembly 10.

Therefore, the second insulation portion 72 according to the exemplary embodiment of the present invention may prevent the cap plate 20 and the third surface 10c of the electrode assembly 10 and the first electrode non-coated part 11a and the second electrode non-coated part 12a from being physically or electrically contacted.

In addition, since the second insulation portion 72 is supported by the first insulation portion 71 to stably fix the third surface 10c, it is possible that the insulation member 70 is stably coupled to the electrode assembly 10.

In addition, the first insulation portion 71 according to the exemplary embodiment of the present invention may have a first thickness t1 and the second insulation portion 72 may have a second thickness t2.

For example, the first insulation portion 71 may have the first thickness t1 of 0.1 mm ∼ 0.25mm and the second insulation portion 72 may have the second thickness t2 of 0.05mm ∼ 0.2mm.

In addition, the insulation member 70 may be made of a material having high heat resistance, rigidity, electrical insulation, and oil resistance.

For example, the insulation member 70 may be made of one of a polypropylene, polyethylene, or polyethyleneterephthalate.

Therefore, the insulation member 70 has heat resistance, rigidity, insulation, and oil resistance, thereby making it possible to minimize corrosion due to the electrolyte leakage in the case 26 or a deformation due to an external force.

As a result, the insulation member 70 having the heat resistance, the rigidity, the electrical insulation, the oil resistance, and corrosion resistance is stably installed to the electrode assembly 10, such that a short circuit in the case 26 that may occur when the electrode assembly 10 contacts physically or electrically with inner side of the case 26 and the cap plate 20 may be effectively prevented.

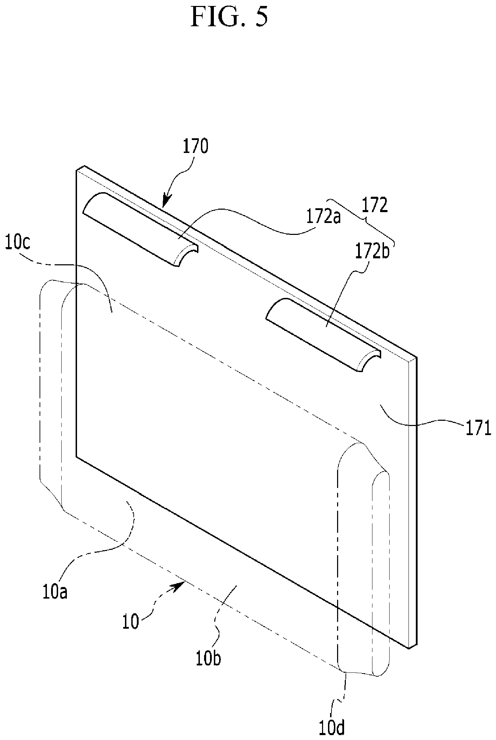

FIG. 5 is a perspective view of an insulation member according to a modification example of the first embodiment of the present invention.

Describing with reference to FIG. 5, since a rechargeable battery according to the exemplary embodiment of the present invention has the same structure as the first exemplary embodiment of the present invention other than the insulation member 170 and therefore, the description of the same structure will be omitted.

The insulation member 170 may include a first insulation portion 171 and a second insulation portion 172.

Here, since the insulation member 170 according to the exemplary embodiment of the present invention has the same structure as the first exemplary embodiment of the present invention other than the second insulation portion 172 and therefore, the description of the same structure will be omitted and therefore, the description of the same structure will be omitted.

The second insulation portion 172 according to the exemplary embodiment of the present invention may be formed with a gap. Thus, the second insulation portion 172 may comprise two parts, namely a first second insulation portion or section 172a and a second second insulation portion or section 172b extended from one side of the first insulation portion 171.

Each of the two parts 172a, 172b may be coupled with the third surface 10c of the electrode assembly 10.

In addition, the cross section of the two parts 172a, 172b may have a shape corresponding to or matching that of the third surface 10c of the electrode assembly 10.

For example, referring back to FIG. 4, the shape of the cross section of the third surface 10c of the electrode assembly 10 may be an arch-shape having a first radius of curvature R1.

In addition, a shape of the cross section of each of the two parts 172a, 172b may be the arch-shaped corresponding to that of the third surface 10c and have predetermined radius of curvature.

However, the cross section of each of the two parts 172a, 172b is not limited to the arch-shape and may be a shape corresponding to that of the cross section of the third surface 10c of the electrode assembly 10.

Here, the first radius of curvature R1 of the third surface 10c of the electrode assembly 10 may be larger than the radius of curvature of the two parts 172a, 172b.

Therefore, each of the two parts 172a, 172b may be coupled to the third surface 10c in forcedly fitting scheme.

In addition, the two parts 172a, 172b may prevent the cap plate 20 and the third surface 10c of the electrode assembly 10 from being physically or electrically contacted.

Consequently, since each of the two parts 172a, 172b is supported by the first insulation portion 171a to stably fix the third surface 10c, such that the insulation member 170 may be stably coupled to the electrode assembly 10.

The first second insulation portion 172a may be designated as second insulation portion or as a first insulation protrusion and the second second insulation portion 172b may be designated as a fourth insulation portion or as a second insulation protrusion.

In addition, the insulation member 170 according to the exemplary embodiment of the present invention is formed to have the same thickness as that of the insulation member 70 and is made of the same material as the insulation member 70, according to the first exemplary embodiment, a detailed description of the thickness and the material of the insulation member 170 will be omitted.

As a result, the insulation member 170 having the heat resistance, the rigidity, the insulation, the oil resistance, and corrosion resistance is stably installed to the electrode assembly 10, such that a short circuit in the case 26 that may occur when the electrode assembly 10 contacts physically or electrically with inner side of the case 26 and the cap plate 20 may be effectively prevented.

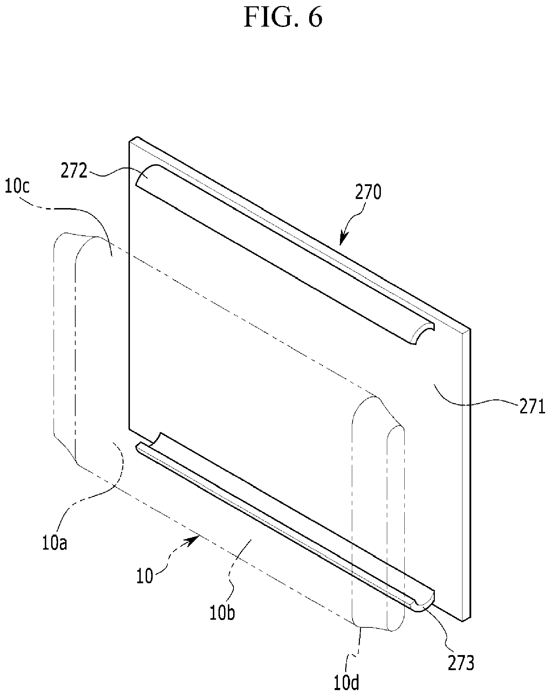

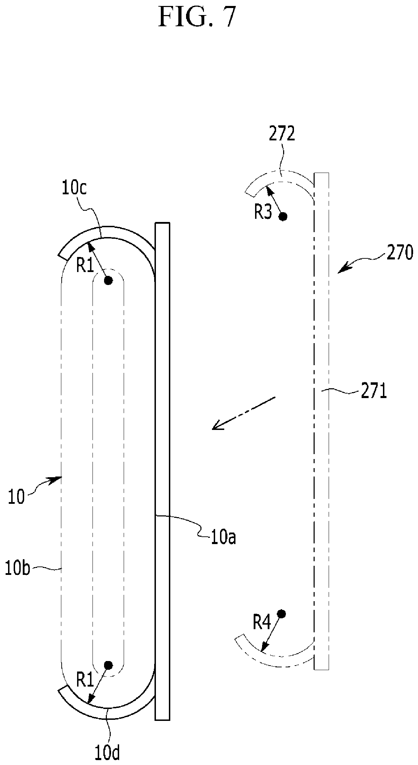

FIG. 6 is a perspective view of an insulation member of a rechargeable battery according to a second embodiment of the present invention and FIG. 7 is a side view of an insulation member in a state in which is coupled to an electrode assembly of FIG. 6.

Describing with reference to FIGS. 6 and 7, since the rechargeable battery according to the exemplary embodiment of the present invention has the same structure as the first exemplary embodiment of the present invention other than the insulation member 270 and therefore, the detailed description of the same structure will be omitted.

The insulation member 270 may include a first insulation portion 271, a second insulation portion 272, and a fourth insulation portion 273.

Here, since the insulation member 270 according to the exemplary embodiment of the present invention has the same structure as the first exemplary embodiment of the present invention other than the second insulation portion 272 and the fourth insulation portion 273 and therefore, the description of the same structure will be omitted and therefore, the description of the same structure will be omitted.

The second insulation portion 272 is extended from one side of the first insulation portion 271 and may be coupled with the third surface 10c of the electrode assembly 10.

In addition, the fourth insulation portion 273 is spatially separated from the second insulation portion 272 and may be coupled with the fourth surface 10d of the electrode assembly 10 extended on the other side of the first insulation portion 271.

Here, the cross section of the second insulation portion 272 and the fourth insulation portion 273 may have a shape corresponding to those of the third surface 10c and the fourth surface 10d of the electrode assembly 10.

For example, referring back to FIG. 4, the shape of the cross section of the third surface 10c of the electrode assembly 10 may be an arch-shape having a first radius of curvature R1.

In addition, a shape of the cross section each of the second insulation portion 272 and the fourth insulation portion 273 may be the arch-shaped corresponding to that of the third surface 10c.

Here, the second insulation portion 272 may have the third radius of curvature R3 and the fourth insulation portion 273 may have the fourth radius of curvature R4.

However, the shape of the cross section each of the second insulation portion 272 and the fourth insulation portion 273 is not limited to the arch-shape and may be a shape corresponding to that of the cross section of the third surface 10c of the electrode assembly 10.

Here, the first radius of curvature R1 of the third surface 10c of the electrode assembly 10 may be larger than the third radius of curvature R3 of the second insulation portion 272.

Therefore, the second insulation portion 272 may be coupled to the third surface 10c in forcedly fitting scheme.

In addition, the shape of the cross section of the fourth insulation portion 273 may be the arch-shape corresponding to that of the fourth surface 10d and have the fourth radius of curvature R4.

However, the shape of the cross section of the fourth insulation portion 273 is not limited to the arch-shape and may be a shape corresponding to that of the cross section of the fourth surface 10d of the electrode assembly 10.

Here, the first radius of curvature R1 of the fourth surface 10d of the electrode assembly 10 may be the same as or smaller than the fourth radius of curvature R4 of the fourth insulation portion 273.

In addition, the fourth radius of curvature R4 of the fourth insulation portion 273 may be larger than the third radius of curvature R3 the second insulation portion 272.

Therefore, the third surface 10c of the electrode assembly 10 is fixed to the second insulation portion 272 in a forced fitting scheme and the fourth surface 10d of the electrode assembly 10 is insertedly fixed to the fourth insulation portion 273, such that the insulation member 270 may be stably fixed to the electrode assembly 10.

In addition, the length of the second insulation portion 272 and the third insulation portion 273 may be the same as or longer than a length of the first surface 10a of the electrode assembly 10.

Therefore, the second insulation portion 272 and the fourth insulation portion 273 according to the exemplary embodiment of the present invention may prevent the cap plate 20 and the third surface 10c of the electrode assembly 10, the inner side of the case 26 and the fourth surface 10d, and the first electrode non-coated part 11a and the second electrode non-coated part 12a from being physically or electrically contacted.

In addition, since each of the second insulation portion 272 and the fourth insulation portion 273 is supported by the first insulation portion 271 to stably fix to the third surface 10c and the fourth surface 10d, such that the insulation member 270 may be stably coupled to the electrode assembly 10.

In addition, the insulation member 270 according to the exemplary embodiment of the present invention is formed to have the same thickness as that of the insulation member 70 and is made of the same material as the insulation member 70, according to the first exemplary embodiment, a detailed description of the thickness and the material of the insulation member 270 will be omitted.

As a result, the insulation member 270 having the heat resistance, the rigidity, the insulation, the oil resistance, and corrosion resistance is stably installed to the electrode assembly 10, such that a short circuit in the case 26 that may occur when the electrode assembly 10 contacts physically or electrically with inner side of the case 26 and the cap plate 20 may be effectively prevented.

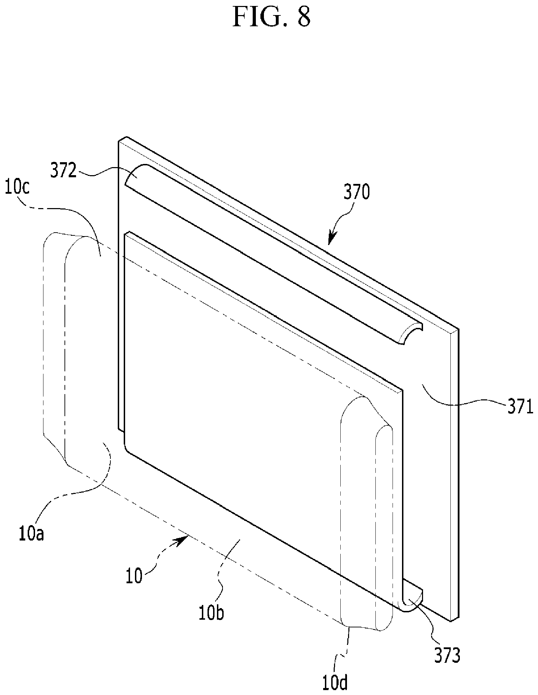

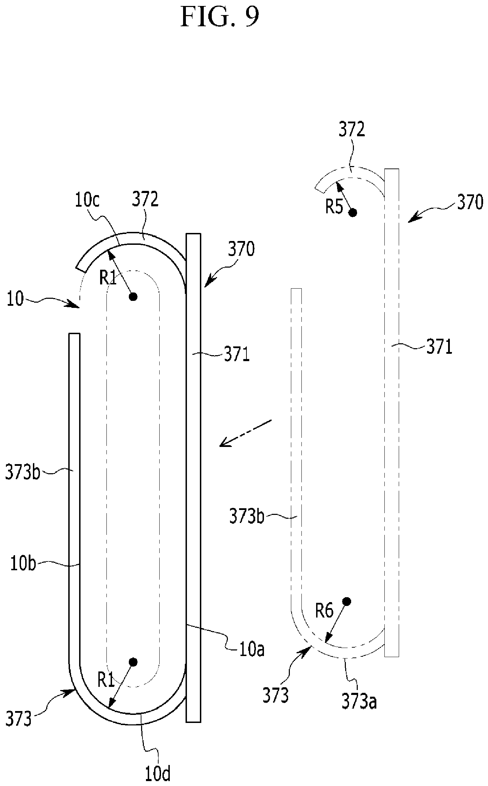

FIG. 8 is a perspective view of an insulation member of a rechargeable battery according to a third embodiment of the present invention and FIG. 9 is a side view of an insulation member in a state in which is coupled to an electrode assembly of FIG. 8.

Describing with reference to FIGS. 8 and 9, since the rechargeable battery according to the exemplary embodiment of the present invention has the same structure as the first exemplary embodiment of the present invention other than the rechargeable battery 100 and the insulation member 370 and therefore, the detailed description of the same structure will be omitted.

The insulation member 370 may include the first insulation portion 371, the second insulation portion 373, and the fourth insulation portion 372.

Here, since the insulation member 370 according to the exemplary embodiment of the present invention has the same structure as the first exemplary embodiment of the present invention other than the fourth insulation portion 372 and the second insulation portion 373 and therefore, the description of the same structure will be omitted and therefore, the description of the same structure will be omitted.

The fourth insulation portion 372 is extended from one side of the first insulation portion 371 and may be coupled with the third surface 10c of the electrode assembly 10.

Here, the cross-section of the fourth insulation portion 372 may have a shape corresponding to that of the third surface 10c of the electrode assembly 10.

For example, the shape of the cross section of the third surface 10c of the electrode assembly 10 may be an arch-shape having a first radius of curvature R1.

In addition, the shape of the cross section of the fourth insulation portion 372 may be the arch-shape corresponding to that of the third surface 10c, having a fifth radius of curvature R5.

However, the shape of the cross section of the fourth insulation portion 372 is not limited to the arch-shape and may be a shape corresponding to that of the cross section of the third surface 10c of the electrode assembly 10.

Here, the first radius of curvature R1 of the third surface 10c of the electrode assembly 10 may be larger than the fifth radius of curvature R5 of the fourth insulation portion 372.

Therefore, the fourth insulation portion 372 may be coupled to the third surface 10c in forcedly fitting scheme.

In addition, the length of the second insulation portion 372 may be the same as or longer than a length of the first surface 10a of the electrode assembly 10.

Therefore, the fourth insulation portion 372 according to the exemplary embodiment of the present invention may prevent the cap plate 20 and the third surface 10c of the electrode assembly 10 and the first electrode non-coated part 11a and the second electrode non-coated part 12a from being physically or electrically contacted.

In addition, the second insulation portion 373 according to the exemplary embodiment of the present invention is spatially separated from the fourth insulation portion 372 at the other side of the first insulation portion 372 and may be formed to face the fourth insulation portion 372.

In detail, the second insulation portion 373 may include the first insulation unit or section 373a and the second insulation unit or section373b extended from one side of the first insulation unit 373a.

With respect to the previous embodiments, the first insulation unit 737a may be designated as second insulation portion or first insulation protrusion and the second insulation unit 373b may be designated as third insulation portion or second insulation plate.

Here, the cross-section of the first insulation unit 373a may have a shape corresponding to that of the fourth surface 10d of the electrode assembly 10.

For example, the shape of cross section of the fourth surface 10d of the electrode assembly 10 according to the exemplary embodiment of the present invention may be an arch-shape and have a first radius of curvature R1 the same with the radius of curvature of the third surface 10c.

In addition, the shape of the cross section of the first insulation unit 373a may be the arch-shape corresponding to that of the fourth surface 10d and have the sixty radius of curvature R6.

However, the shape of the cross section of the first insulation unit 373a is not limited to the arch-shape and may be a shape corresponding to that of the cross section of the fourth surface 10d of the electrode assembly 10.

Here, the first radius of curvature R1 of the fourth surface 10d of the electrode assembly 10 may be the same as or smaller than the sixth radius of curvature R6 of the first insulation unit 373a.

In addition, the sixth radius of curvature R6 of the first insulation unit 373a may be larger than the fifth radius of curvature of the second insulation portion 372.

Therefore, the third surface 10c of the electrode assembly 10 may be fixed to the second insulation portion 372 in a forced fitting scheme or manner and the fourth surface 10d of the electrode assembly 10 is insertedly fixed to the first insulation unit 373a, such that the insulation member 370 may be stably fixed to the electrode assembly 10.

In addition, the second insulation portion 373b may be installed so as to be closely adhered to the second surface 10b of the electrode assembly 10.

In more detail, the second insulation unit 373b according to the exemplary embodiment of the present invention may be extended from one side of the first insulation unit 373a and may be closely positioned to the second surface 10b of the electrode assembly 10 when the third surface 10c of the electrode assembly 10 is inserted into the first insulation unit 373a and fixed thereto.

Therefore, the insulation member 370 may be stably fixed to the electrode assembly 10 by the second insulation unit 373b.

In addition, the length of the third insulation portion 373 may be the same as or longer than the length of the first surface 10a of the electrode assembly 10.

Therefore, each of the first insulation unit 373a and the second insulation unit 373b of the third insulation portion 373 according to the exemplary embodiment of the present invention may prevent the case 26 and the second surface 10b and the fourth surface 10d of the electrode assembly 10, and the first electrode non-coated part 11a and the second electrode non-coated part 12a from being physically or electrically contacted.

In addition, the insulation member 370 according to the exemplary embodiment of the present invention is formed to have the same thickness as that of the insulation member 70 and is made of the same material as the insulation member 70, according to the first exemplary embodiment, a detailed description of the thickness and the material of the insulation member 370 will be omitted.

As a result, the insulation member 370 having the heat resistance, the rigidity, the insulation, the oil resistance, and corrosion resistance is stably installed to the electrode assembly 10, such that a short circuit in the case 26 that may occur when the electrode assembly 10 contacts physically or electrically with inner side of the case 26 and the cap plate 20 may be effectively prevented.

## Claims

1. Rechargeable battery (100) with a case (26) having an opening, an electrode assembly (10) arranged in the case (26), the electrode assembly (10) comprising a first electrode (11), a second electrode (12) and a separator (13) between the first and the second electrodes (11, 12), a cap plate (20) coupled to the case and closing the opening, and an insulation member (70) arranged between the electrode assembly (10) and the case (26), wherein the electrode assembly (10) comprises a first electrode non-coated part (11a), a second electrode non-coated part (12a), a first surface (10a), a second surface (10b) positioned at the opposite side of the electrode assembly (10), a third surface (10c) and a fourth surface (10d), the third surface (10c) and the fourth surface (10d) connecting the first surface (10a) to the second surface (10b), the first to fourth surfaces (10a-d) being formed between the first and second electrode non-coated parts (11a,12a) and the third surface (10c) facing the cap plate (20), **characterized in that** the insulation member (70) comprises a first insulation portion (71) and a second insulation portion (72) that projects from the first insulation portion (71) and that is in contact with the third surface (10c), wherein an edge of the first insulation portion (71) and a side of the second insulation portion (72) both abut the same plane, the side of the second insulation portion facing away from the electrode assembly (10), and wherein the plane extends perpendicular to the side of the first insulation portion (71) from which the second insulation portion (72) protrudes, wherein the parts of the first and the second insulation portions (71, 72) that abut the plane form a stop for the cap plate (20), on which the cap plate (20) is positioned during affixing it to the case (26).

2. Rechargeable battery (100) according to claim 1, **characterized in that** the second insulation portion (72) is at least sectionwise formed complementary to the third surface (10c).

3. Rechargeable battery (100) according to claim 1 or 2, **characterized in that** the third surface (10c) is curved and comprises a first radius of curvature (R1), and the second insulation portion (72) comprises a curved surface that is in contact with the third surface (10c) of the electrode assembly (10), the curved surface of the second insulation portion (72) comprising a second radius of curvature (R2), wherein the radii of curvature (R1, R2) correspond to each other.

4. Rechargeable battery (100) according to any of claims 1 to 3, **characterized in that** the electrode assembly (10) and the second insulation portion (72) are interconnected by a force fit.

5. Rechargeable battery (100) according to claim 4, **characterized in that** a clear width of the second insulation portion (72) formed for at least sectionwise accommodating the third surface (10c) is smaller than a width of the electrode assembly (10).

6. Rechargeable battery (100) according to claim 4 or 5, **characterized in that** the third surface (10c) is curved and comprises a first radius of curvature (R1), and the second insulation portion (72) comprises a curved surface that is in contact with the third surface (10c) of the electrode assembly (10), the curved surface of the second insulation portion (72) comprising a second radius of curvature (R2), wherein the second radius of curvature (R2) is smaller than the first radius of curvature (R1).

7. Rechargeable battery (100) according to any of claims 1 to 6, **characterized in that** the second insulation portion (72) projects from a side of the first insulation portion (71) that faces the electrode assembly (10).

8. Rechargeable battery (100) according to any of claims 1 to 7, **characterized in that** the second insulation portion (72) is arranged at a distance from at least an edge of the first insulation portion (71).

9. Rechargeable battery (100) according to any of claims 1 to 8, **characterized in that** the insulation member (370) comprises a third insulation portion (373b) parallel and at a distance to the first insulation portion (371), wherein the second insulation portion (373a) spans a gap between the first and the third insulation portions (371, 373b).

10. Rechargeable battery (100) according to any of claims 1 to 9, **characterized in that** the insulation member (170) comprises the second and a fourth insulation portion (172a, 172b) projecting from the same side of the first insulation portion (171), wherein the second and the fourth insulation portions (172a, 172b) are both arranged at the same side of the electrode assembly (10).

11. Rechargeable battery (100) according to any of claims 1 to 9, **characterized in that** the insulation member (270) comprises the second and a fourth insulation portion (272, 273) projecting from the same side of the first insulation portion (271), wherein the second and a fourth insulation portions (272, 273) are arranged at opposite sides of the electrode assembly (10).

12. Rechargeable battery (100) according to claim 11, **characterized in that** the third insulation portion (373b) extends from the second insulation portion (373a) towards the fourth insulation portion (372).

13. Rechargeable battery (100) according to claim 12, **characterized in that** the third insulation portion (373b) ends at a distance to the fourth insulation portion (372).

## Patentansprüche

1. Wiederaufladbare Batterie (100) mit einem Gehäuse (26), das eine Öffnung, eine im Gehäuse (26) angeordnete Elektrodenanordnung (10), wobei die Elektrodenanordnung (10) eine erste Elektrode (11), eine zweite Elektrode (12) und einen Separator (13) zwischen der ersten und der zweiten Elektrode (11, 12) aufweist, eine Deckplatte (20), die mit dem Gehäuse gekoppelt ist und die Öffnung verschließt, und ein Isolationselement (70), das zwischen der Elektrodenanordnung (10) und dem Gehäuse (26) angeordnet ist, aufweist, wobei die Elektrodenanordnung (10) einen ersten nicht beschichteten Elektrodenteil (11a), einen zweiten nicht beschichteten Elektrodenteil (12a), eine erste Oberfläche (10a), eine zweite Oberfläche (10b), die auf der gegenüberliegenden Seite der Elektrodenanordnung (10) positioniert ist, eine dritte Oberfläche (10c) und eine vierte Oberfläche (10d) aufweist, wobei die dritte Oberfläche (10c) und die vierte Oberfläche (10d) die erste Oberfläche (10a) mit der zweiten Oberfläche (10b) verbinden, wobei die erste bis vierte Oberfläche (10a-d) zwischen dem ersten und zweiten nicht beschichteten Elektrodenteil (11a, 12a) ausgebildet ist und die dritte Oberfläche (10c) der Deckplatte (20) zugewandt ist, **dadurch gekennzeichnet, dass** das Isolationselement (70) einen ersten Isolierungsteil (71) und einen zweiten Isolierungsteil (72), der vom ersten Isolierungsteil (71) vorsteht und der mit der dritten Oberfläche (10c) in Kontakt steht, aufweist, wobei sowohl ein Rand des ersten Isolierungsteils (71) als auch eine Seite des zweiten Isolierungsteils (72) an derselben Ebene anliegen, wobei die Seite des zweiten Isolierungsteils von der Elektrodenanordnung (10) abgewandt ist, und wobei sich die Ebene perpendikulär zur Seite des ersten Isolierungsteils (71), von dem der zweite Isolierungsteil (72) vorsteht, erstreckt, wobei die Teile des ersten und des zweiten Isolierungsteils (71, 72), die an der Ebene anliegen, einen Anschlag für die Deckplatte (20) ausbilden, auf dem die Deckplatte (20) während ihrer Befestigung am Gehäuse (26) positioniert ist.

2. Wiederaufladbare Batterie (100) nach Anspruch 1, **dadurch gekennzeichnet, dass** der zweite Isolierungsteil (72) zumindest abschnittweise komplementär zur dritten Oberfläche (10c) ausgebildet ist.

3. Wiederaufladbare Batterie (100) nach Anspruch 1 oder 2, **dadurch gekennzeichnet, dass** die dritte Oberfläche (10c) gekrümmt ist und einen ersten Krümmungsradius (R1) aufweist, und der zweite Isolierungsteil (72) eine gekrümmte Oberfläche, die mit der dritten Oberfläche (10c) der Elektrodenanordnung (10) in Kontakt steht, aufweist, wobei die gekrümmte Oberfläche des zweiten Isolierungsteils (72) einen zweiten Krümmungsradius (R2) aufweist, wobei sich die Krümmungsradien (R1, R2) entsprechen.

4. Wiederaufladbare Batterie (100) nach einem der Ansprüche 1 bis 3, **dadurch gekennzeichnet, dass** die Elektrodenanordnung (10) und der zweite Isolierungsteil (72) durch Kraftschluss miteinander verbunden sind.

5. Wiederaufladbare Batterie (100) nach Anspruch 4, **dadurch gekennzeichnet, dass** eine lichte Weite des zweiten Isolierungsteils (72), die ausgebildet ist, um die dritte Oberfläche (10c) zumindest abschnittweise aufzunehmen, kleiner als eine Breite der Elektrodenanordnung (10) ist.

6. Wiederaufladbare Batterie (100) nach Anspruch 4 oder 5, **dadurch gekennzeichnet, dass** die dritte Oberfläche (10c) gekrümmt ist und einen ersten Krümmungsradius (R1) aufweist, und der zweite Isolierungsteil (72) eine gekrümmte Oberfläche, die mit der dritten Oberfläche (10c) der Elektrodenanordnung (10) in Kontakt steht, aufweist, wobei die gekrümmte Oberfläche des zweiten Isolierungsteils (72) einen zweiten Krümmungsradius (R2) aufweist, wobei der zweite Krümmungsradius (R2) kleiner als der erste Krümmungsradius (R1) ist.

7. Wiederaufladbare Batterie (100) nach einem der Ansprüche 1 bis 6, **dadurch gekennzeichnet, dass** der zweite Isolierungsteil (72) von einer Seite des ersten Isolierungsteils (71), der der Elektrodenanordnung (10) zugewandt ist, vorsteht.

8. Wiederaufladbare Batterie (100) nach einem der Ansprüche 1 bis 7, **dadurch gekennzeichnet, dass** der zweite Isolierungsteil (72) in einem Abstand von zumindest einem Rand des ersten Isolierungsteils (71) angeordnet ist.

9. Wiederaufladbare Batterie (100) nach einem der Ansprüche 1 bis 8, **dadurch gekennzeichnet, dass** das Isolationselement (370) einen dritten Isolierungsteil (373b) parallel und in einem Abstand zum ersten Isolierungsteil (371) aufweist, wobei der zweite Isolierungsteil (373a) eine Lücke zwischen dem ersten und dem dritten Isolierungsteil (371, 373b) überspannt.

10. Wiederaufladbare Batterie (100) nach einem der Ansprüche 1 bis 9, **dadurch gekennzeichnet, dass** das Isolationselement (170) den zweiten und einen vierten Isolierungsteil (172a, 172b), die von derselben Seite des ersten Isolierungsteils (171) vorstehen, aufweist, wobei sowohl der zweite als auch der vierte Isolierungsteil (172a, 172b) auf derselben Seite der Elektrodenanordnung (10) angeordnet sind.

11. Wiederaufladbare Batterie (100) nach einem der Ansprüche 1 bis 9, **dadurch gekennzeichnet, dass** das Isolationselement (270) den zweiten und einen vierten Isolierungsteil (272, 273), die von derselben Seite des ersten Isolierungsteils (271) vorstehen, aufweist, wobei der zweite und ein vierter Isolierungsteil (272, 273) auf gegenüberliegenden Seiten der Elektrodenanordnung (10) angeordnet sind.

12. Wiederaufladbare Batterie (100) nach Anspruch 11, **dadurch gekennzeichnet, dass** sich der dritte Isolierungsteil (373b) vom zweiten Isolierungsteil (373a) zum vierten Isolierungsteil (372) erstreckt.

13. Wiederaufladbare Batterie (100) nach Anspruch 12, **dadurch gekennzeichnet, dass** der dritte Isolierungsteil (373b) in einem Abstand zum vierten Isolierungsteil (372) endet.

## Revendications

1. Batterie rechargeable (100) avec un boîtier (26) ayant une ouverture, un ensemble d'électrodes (10) agencé dans le boîtier (26), l'ensemble d'électrodes (10) comprenant une première électrode (11), une seconde électrode (12) et un séparateur (13) entre la première et la seconde électrode (11, 12), une plaque formant capuchon (20) couplée au boîtier et fermant l'ouverture, et un élément d'isolation (70) agencé entre l'ensemble d'électrode (10) et le boîtier (26), dans laquelle l'ensemble d'électrodes (10) comprend une partie non recouverte de première électrode (11a), une partie non recouverte de seconde électrode (12a), une première surface (10a), une deuxième surface (10b) positionnée sur le côté opposé de l'ensemble d'électrodes (10), une troisième surface (10c) et une quatrième surface (10d), la troisième surface (10c) et la quatrième surface (10d) raccordant la première surface (10a) à la deuxième surface (10b), les première, deuxième, troisième et quatrième surfaces (10a-d) étant formées entre les parties non recouvertes des première et seconde électrodes (11a, 12a) et la troisième surface (10c) faisant face à la plaque formant capuchon (20), **caractérisée en ce que** l'élément d'isolation (70) comprend une première partie d'isolation (71) et une seconde d'isolation (72) qui fait saillie de la première partie d'isolation (71) et qui est en contact avec la troisième surface (10c), dans laquelle un bord de la première partie d'isolation (71) et un côté de la deuxième partie d'isolation (72) viennent tous deux en butée contre le même plan, le côté de la deuxième partie d'isolation étant orienté à l'opposé de l'ensemble d'électrodes (10), et dans laquelle le plan s'étend perpendiculairement au côté de la première partie d'isolation (71) à partir duquel la deuxième partie d'isolation (72) fait saillie, dans laquelle les parties de la première et de la deuxième partie d'isolation (71, 72) qui viennent en butée contre le plan forment une butée pour la plaque formant capuchon (20), sur lequel la plaque formant capuchon (20) est positionnée pendant sa fixation sur le boîtier (26).

2. Batterie rechargeable (100) selon la revendication 1, **caractérisée en ce que** la deuxième partie d'isolation (72) est formée, au moins dans le sens de la section, de manière complémentaire par rapport à la troisième surface (10c).

3. Batterie rechargeable (100) selon la revendication 1 ou 2, **caractérisée en ce que** la troisième surface (10c) est incurvée et comprend un premier rayon de courbure (R1), et la deuxième partie d'isolation (72) comprend une surface incurvée qui est en contact avec la troisième surface (10c) de l'ensemble d'électrodes (10), la surface incurvée de la deuxième partie d'isolation (72) comprend un second rayon de courbure (R2), dans laquelle les rayons de courbure (R1, R2) correspondent l'un à l'autre.

4. Batterie rechargeable (100) selon l'une quelconque des revendications 1 à 3, **caractérisée en ce que** l'ensemble d'électrodes (10) et la deuxième partie d'isolation (72) sont interconnectés par un ajustement à force.

5. Batterie rechargeable (100) selon la revendication 4, **caractérisée en ce qu'**une largeur utile de la deuxième partie d'isolation (72) formée pour loger, au moins dans le sens de la section, la troisième surface (10c), est inférieure à une largeur de l'ensemble d'électrodes (10).

6. Batterie rechargeable (100) selon la revendication 4 ou 5, **caractérisée en ce que** la troisième surface (10c) est incurvée et comprend un premier rayon de courbure (R1), et la deuxième partie d'isolation (72) comprend une surface incurvée qui est en contact avec la troisième surface (10c) de l'ensemble d'électrodes (10), la surface incurvée de la deuxième partie d'isolation (72) comprend un second rayon de courbure (R2), dans laquelle le second rayon de courbure (R2) est inférieur au premier rayon de courbure (R1).

7. Batterie rechargeable (100) selon l'une quelconque des revendications 1 à 6, **caractérisée en ce que** la deuxième partie d'isolation (72) fait saillie à partir d'un côté de la première partie d'isolation (71) qui fait face à l'ensemble d'électrodes (10).

8. Batterie rechargeable (100) selon l'une quelconque des revendications 1 à 7, **caractérisée en ce que** la deuxième partie d'isolation (72) est agencée à une distance d'au moins un bord de la première partie d'isolation (71).

9. Batterie rechargeable (100) selon l'une quelconque des revendications 1 à 8, **caractérisée en ce que** l'élément d'isolation (370) comprend une troisième partie d'isolation (373b) parallèle et à une distance de la première partie d'isolation (371), dans laquelle la deuxième partie d'isolation (373a) couvre un espace entre la première et la troisième partie d'isolation (371, 373b).

10. Batterie rechargeable (100) selon l'une quelconque des revendications 1 à 9, **caractérisée en ce que** l'élément d'isolation (170) comprend la deuxième et la quatrième partie d'isolation (172a, 172b) faisant saillie du même côté de la première partie d'isolation (171), dans laquelle la deuxième et la quatrième partie d'isolation (172a, 172b) sont toutes deux agencées du même côté de l'ensemble d'électrodes (10).

11. Batterie rechargeable (100) selon l'une quelconque des revendications 1 à 9, **caractérisée en ce que** l'élément d'isolation (270) comprend la deuxième et la quatrième partie d'isolation (272, 273) faisant saillie à partir du même côté de la première partie d'isolation (271), dans laquelle la deuxième et la quatrième partie d'isolation (272, 273) sont agencées au niveau des côtés opposés de l'ensemble d'électrodes (10).

12. Batterie rechargeable (100) selon la revendication 1, **caractérisée en ce que** la troisième partie d'isolation (373b) s'étend à partir de la deuxième partie d'isolation (373a) vers la quatrième partie d'isolation (372) .

13. Batterie rechargeable (100) selon la revendication 12, **caractérisée en ce que** la troisième partie d'isolation (373b) se termine à une certaine distance de la quatrième partie d'isolation (372).
